# EUROPÄISCHE PATENTSCHRIFT

(11) **EP 2 365 021 B1**
(45) Veröffentlichungstag und Bekanntmachung des Hinweises auf die Patenterteilung: **08.05.2013**
(21) Anmeldenummer: 11151628.2
(22) Anmeldetag: 21.01.2011
(51) Int. Cl.: C08G 77/26

(54) **Verfahren zur Herstellung von Amin-Amid-funktionellen Siloxanen**
Method for producing amine-amide functional siloxanes
Procédé de fabrication de siloxanes amine-amide fonctionnels

(30) Priorität: 22.02.2010 DE 102010002178
(43) Veröffentlichungstag der Anmeldung: 14.09.2011
(73) Patentinhaber: Evonik Goldschmidt GmbH, 45127 Essen (DE)
(72) Erfinder: Ferenz, Michael, 45147, Essen (DE); Mund, Christian, 45149, Essen (DE); Knott, Wilfried, 45355, Essen (DE); Silber, Stefan, 47804, Krefeld (DE)

(56) Entgegenhaltungen:
- US-B1- 6 248 855

## Beschreibung

### Stand der Technik:

Siloxane die mit Amin-Funktionen substituiert sind, werden häufig in der Textilindusrie als Fasergleitmittel, Wäscheweichmacher oder als Anti-Knitter-Hilfe eingesetzt. Weiterhin finden sie vielfach Anwendung in Personal-Care-Anwendungen, zum Beispiel als Konditioniermittel für Haare.

Siloxane, bei denen neben Aminfunktionen noch zusätzlich Amidfunktionen an das Siloxangerüst geknüpft sind, finden dagegen keine Beachtung in der Patentliteratur, obwohl derartige Verbindungen durch die Einführung der Amidfunktion ein eigenes Eigenschaftsprofil aufweisen. So führt die Einführung der Amidfunktionen zu deutlich erhöhten Viskositäten, was die Eigenschaften für viele Applikationen stark beeinflussen sollte.

Das derartige Verbindungen nicht eingesetzt werden, mag daran liegen, dass die Herstellung von gemischt Amin- und Amid-funktionellen Siloxanen komplexer ist, da die AmidFunktion erst durch eine Folgereaktion in das Polymer eingeführt werden muss, wenn man von reinen Aminosiloxanen ausgeht.

Herstellmethoden für reine Aminosiloxane sind in der Patentliteratur beschrieben.

Zum Beispiel beschreibt US 4,633,002 einen Prozess zur Herstellung von Aminosiloxanen, bei denen Silanolterminierte Siloxane mit aminofunktionellen Silanen in Gegenwart organometallischer Katalysatoren umgesetzt werden.

US 5,391,675 beschreibt ein Verfahren zur Herstellung von Aminosiloxanen, bei dem endständig Silanol funktionelle Polysiloxane, Amin-funktionelle Silane, und ein Katalysatorsystem, welches aus Barium- oder Strontium-Hydroxid sowie Natriumborat oder Natriumphosphat besteht, zur Reaktion gebracht werden.

US 7,238,768 beschreibt aminofunktionelle Siloxane, die durch die Umsetzung von Amin-funktionellen Silanen mit Carbonsäuren und Silanol-funktionellen Polysiloxanen hergestellt werden. Bei der dort beschriebenen Umsetzung entstehen Aminosiloxane, die an den Kettenenden mit kondensationsfähigen Gruppen ausgestattet sind. Dabei handelt es sich entweder um OH-Funktionen oder um Alkoxyreste mit 8 bis 30 Kohlenstoffatomen. Unter den dort beschriebenen Reaktionsbedingungen bilden sich keine Amidfunktionen aus.

WO 2009/06564 beschreibt Siloxane, die neben hydrophoben und hydrophilen organischen Resten auch eine AmidFunktion aufweisen können. Diese Strukturen werden mittels Hydrosilylierung hergestellt.

WO 2009/025151 beschreibt Amid-Gruppen haltige Siloxane, die sich als Komponente für Polybenzoimidazol- und Polybenzoxazol-Harze eignen.

WO 2004/072152 beschreibt eine Methode zur Herstellung von Siloxan-basierten Polyamiden, bei dem ein organisches Amid mit einem hydrid-funktionellen Polysiloxan in Gegenwart eines die Hydrosilylierung fördernden Katalysators umgesetzt wird.

US 6,248,855 beschreibt ein Verfahren zur Herstellung von Silicon-Öl-in-Wasser-Emulsionen enthaltend ein lineares nichtvernetztes Siliconcopolymer, welches durch Polymerisieren eines OH-endblockierten Polydiorganosiloxan mit einem aminfunktionellen Trialkoxysilan in Gegenwart eines Metallkatalysators hergestellt wird.

### Beschreibung der Erfindung:

Aufgabe der Erfindung ist die Bereitstellung von neuen Verbindungen, die die Eigenschaftsprofile der Amin- und der Amid-Funktionen tragenden Siloxane miteinander in positiver Weise verbinden.

Gefunden werden konnten Siloxane, die neben Aminfunktionen auch noch zusätzlich Amidfunktionen aufweisen und sich damit durch ein besonderes Eigenschaftsprofil auszeichnen.

Gegenstand der Erfindung ist daher ein Verfahren das die einfache und schnelle Synthese von gemischt Amin-Amid-funktionellen Siloxanen erlaubt, sowie die so hergestellten gemischt Amin-Amid-funktionellen Siloxane.

Beispielsweise führt die Einführung der Amidfunktionen zu einer höheren Viskosität im Vergleich zu reinen Aminosiloxanen. Auch das Absorpionsvermögen auf Oberflächen ändert sich wesentlich, so dass sich die anwendungstechnischen Eigenschaften von denen reiner Aminosiloxane unterscheiden.

Als Amin-Amid-funktionellen Siloxanen werden im Rahmen dieser Erfindung Siloxane verstanden, die sowohl mit Amin-, als auch mit Amidfunktionen und gegebenenfalls weiteren organischen Resten modifiziert sind.

Zur Herstellung der Amin-Amid-funktionellen Siloxane werden SiOH-funktionelle Siloxane der allgemeinen Formel I mit aminofunktionellen Silanen der allgemeinen Formel II in Gegenwart von Carbonsäureanhydriden und optional in Gegenwart von Alkoholen, Aminen und/oder Alkanolaminen bei Temperaturen von 40 - 180 °C zur Reaktion gebracht.

Ein geeignetes Verfahren zur Darstellung besteht darin, dass SiOH-funktionelle Siloxane der allgemeinen Formel I, mit aminofunktionellen Silanen der allgemeinen Formel II und Carbonsäureanhydriden und optional Alkoholen, Amine und/oder Alkanolaminen zur Reaktion gebracht werden.

M^{OH}ₐ D_{b} T_{c} Q_{d} Formel I

dabei gilt:
- M^{OH}: = [HO-SiR¹₂O_{1/2}]
- D: = [SiR¹₂O_{2/2}]
- T: = [SiR¹O_{3/2]}
- Q: = [SiO_{4/2}]

- a: = 2 - 10, bevorzugt 2 - 4, insbesondere 2,
- b: = 5 - 150, bevorzugt 8 - 80, insbesondere 10 - 60,
- c: = 0 - 10, bevorzugt 0 - 3, insbesondere 0
- d: = 0 - 10, bevorzugt 0 - 3, insbesondere 0

R¹ = gleiche oder verschiedene Reste aus der Gruppe: Alkylreste mit 1 - 30 Kohlenstoffatomen, Arylreste mit 6-30 Kohlenstoffatomen, Alkarylreste mit 7-30 Kohlenstoffatomen, bevorzugt Methyl-, Ethyl- oder Phenyl-Reste, insbesondere Methylrest.

R¹ₑ (R²O)_{f}SiR³ Formel II

dabei gilt:
- e: = 0, 1 oder 2, bevorzugt 0 oder 1, insbesondere 1,
- f: = 1, 2 oder 3, bevorzugt 2 oder 3, insbesondere 2,
mit der Maßgabe, dass e + f = 3 ist,
- R²: = gleiche oder verschiedene Alkylreste mit 1 - 30 Kohlenstoffatomen, bzw. Arylreste mit 6-30 , bzw. Alkarylreste mit 7-30 Kohlenstoffatomen, bevorzugt Methyl-, Ethyl- oder Phenyl-Reste, insbesondere Methyl oder Ethyl,
- R³ =: gleiche oder verschiedene organische Reste, die mindestens eine Aminofunktion tragen, insbesondere gleiche oder verschiedene Reste der allgemeinen Formel III

-(CR⁴₂)_{g}[NR⁵-(CR⁴₂)ₕNR⁵₂ Formel III
- g: =gleiche oder verschiedene ganze Zahlen von 1 - 6, bevorzugt 1 - 3, insbesondere 1 oder 3,
- h: = gleiche oder verschiedene ganze Zahlen von 0 - 6, bevorzugt 0 - 3, insbesondere 0 oder 1,
- i: = gleiche oder verschiedene ganze Zahlen von 1 - 6, bevorzugt 1 - 3, insbesondere 2 oder 3.
- R⁴: = gleiche oder verschiedene Alkylreste mit 1 - 12 Kohlenstoffatomen, bzw. Arylreste mit 6-12 Kohlenstoffatomen bzw. Alkarylreste mit 7-12 Kohlenstoffatomen oder H, bevorzugt Methyl oder H, insbesondere H sind,
- R⁵: = gleiche oder verschiedene Alkylreste mit 1 - 12 Kohlenstoffatomen, bzw. Arylreste mit 6-12 Kohlenstoffatomen bzw. Alkarylreste mit 7-12 Kohlenstoffatomen oder H, bevorzugt Methyl, Phenyl, Benzyl oder H, insbesondere H sind.

Bei den SiOH-funktionellen Siloxanen, aber auch bei den durch die Umsetzung gebildeten Produkten, handelt es sich um Polymere mit einer gewissen Molekulargewichtsverteilung. So stellen die angegebenen Indizes a, b, c und d nur Mittelwerte dar.

Beispiele für bevorzugte aminofunktionelle Silane sind:
(EtO)₃Si(CH₂)₃NH₂, (MeO)₃Si(CH₂)₃NH₂
Me (EtO)₂Si(CH₂)₃NH₂, Me (MeO)₂Si(CH₂)₃NH₂
(EtO)₃Si(CH₂)₃NH(CH₂)₂NH₂, (MeO)₃Si(CH₂)₃NH (CH₂)₂NH₂
Me (EtO)₂Si(CH₂)₃NH(CH₂)₂NH₂, Me (MeO)₂Si(CH₂)₃NH(CH₂)₂NH₂ (EtO)₃SiCH₂NH₂, (MeO)₃SiCH₂NH₂.

Geeignete Carbonsäureanhydride sind unter anderem Anhydride von linearen oder verzweigten, gesättigten oder ungesättigten Alkylcarbonsäuren, wie zum Beispiel Essigsäureanhydrid, Propionsäureanhydrid, Buttersäureanhydrid oder Isononansäureanhydrid. Weiterhin eignen sich cyclische Anhydride, wie zum Beispiel, Bernsteinsäureanhydrid, Itaconsäureanhydride, Maleinsäureanhydrid, Glutarsäureanhydrid, Phthalsäureanhydrid oder Hexahydrophthalsäureanhydrid.

Als optionale Komponente eignen sich insbesondere ein oder mehrere ein- oder mehrfachfunktinelle Alkohole, primäre oder sekundäre Amine oder auch Aminoalkanole.

Bei der Umsetzung bilden die Carbonsäureanhydride Amidfunktionen mit den Aminogruppen aus, die über die aminofunktionellen Silane eingebracht werden. Des Weiteren werden freie Carbonsäuren gebildet. Beispielhaft ist in Formelschema 1 diese Reaktion schematisch mit Essigsäureanhydrid und einem Propylamino-Rest dargestellt.

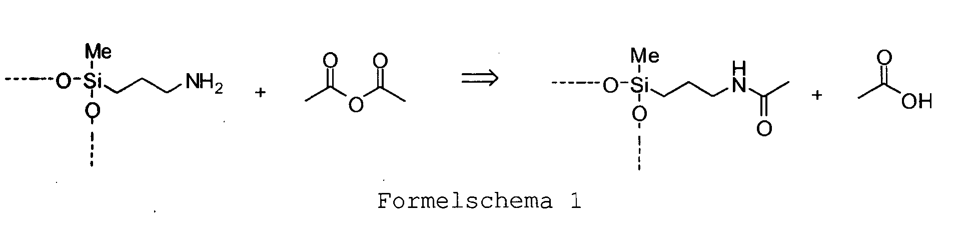

Weiterhin kommt es während der Umsetzung zu Kondensationsreaktionen, bei denen die Alkoxyfunktionen des Silans der allgemeinen Formel II mit den SiOH-Funktionen des SiOH-funktionellen Siloxans der allgemeinen Formel I reagieren. Dies ist zum Beispiel daran zu erkennen, dass sich während der Umsetzung Alkohole bilden. Beispielhaft ist diese Reaktion in Formelschema 2 schematisch dargestellt. Auch die optional eingesetzten ein- oder mehrfachfunktionelle Alkohole, primäre oder sekundäre Amine oder auch Aminoalkanole können unter Kondensation mit dem Silanol oder dem Silan unter Abspaltung von Wasser oder Alkohol reagieren.

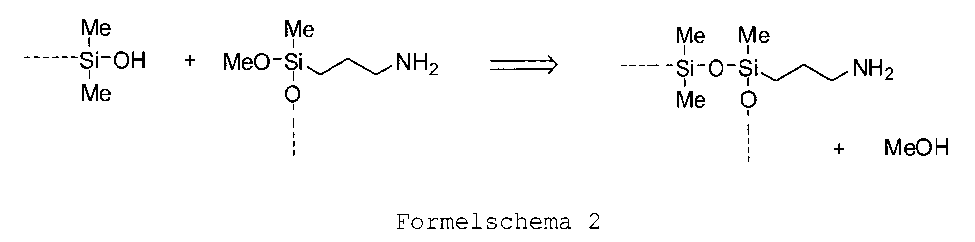

Neben diesen Reaktionen können auch noch weitere Reaktionen stattfinden, wie zum Beispiel die Kondensation von zwei SiOH-Funktionen unter Bildung von Wasser.

Durch Kondensationsreaktionen werden die Amin- und die Amidfunktionen in das Siloxangerüst eingebaut. Auch können bereits in das Siloxangerüst eingebaute Aminofunktionen nachträglich amidisiert werden. Es bilden sich Siloxane die sowohl Amin- als auch Amidfunktionen besitzen und ein höheres mittleres Molekulargewicht ausweisen, als die eingesetzten Siloxane der allgemeinen Formel I.

Zu erkennen ist der Molgewichtsaufbau auch an dem Anstieg der Viskosität des Reaktionsgemisches.

Gegebenenfalls können neben den aminofunktionellen Siloxanen der allgemeinen Formel II weitere Di- oder Tri-oder Tetra-alkoxysilanen der Reaktionsmischung zugesetzt werden, zum Beispiel um weitere organische Funktionen in das sich bildende Polymer einzubauen oder um Verzweigungen in das Polymerrückgrad zu integrieren. Geeignete Alkoxysiloxane sind zum Beispiel Tetraethoxysilan, Triethoxysilan, Trimethoxysilan, Triethoxy-octylsilan, Phenyl-triethoxysilan, Iso-Butyltrimethoxysilan, 3-Mercaptopropyltrimethoxysilan, 3-Ureidopropyltriethoxysilan, Hexadecyltrimethoxysilan oder Polyethylenglykol-funktionelles Alkoxysilan.

Bei der Kondensation bilden sich Zusammensetzungen, die hauptsächlich Amin-Amid-funktionelle Siloxane enthalten. Ein weiterer Gegenstand dieser Erfindung sind daher Zusammensetzungen, erhältlich nach dem erfindungsgemäßen Verfahren, enthaltend Amid-Amin-Siloxane der allgemeinen Formel IV.

M^{OR}ⱼMₖDₗTₘQₙM'ₒD'ₚT'_{q} Formel IV

Dabei sind D, T und Q wie oben definiert.
- M^{OR}: = [R⁶OSiR¹₂O_{1/2}]
- M: = [R¹₃SiO_{1/2}]
- M': = [R⁷SiR¹₂O_{1/2}]
- D': = [SiR¹R⁷O_{2/2}]
- T': = [SiR⁷O_{3/2}]
- R⁶: = R² oder H
- R⁷: = gleiche oder verschiedene organische Reste, mit der Maßgabe, dass jedes Molekül der Formel IV statistisch mindestens einen Aminrest der allgemeinen Formel III und zudem mindestens einen Amid-rest der allgemeinen Formel V trägt,

- (CR⁴₂)_{g}[NR⁵- (CR⁴₂)ᵢ]ₕNR⁵₂ Formel III

-(CR⁵₂)_{g}[NR⁸-(CR⁵₂)ᵢ]ₕNR⁸₂ Formel V
- R⁸: = R⁵ oder eine Carboxylatgruppe, mit der Maßgabe, dass mindestens einer der beiden R⁸-Reste in der Formel V ein Carboxylatrest ist,
- j: = 0 - 10,
- k: = 0 - 10,
mit der Maßgabe, dass j + k größer oder gleich 2 ist,
- l: = 10 - 3000, bevorzugt 16 - 2000, insbesondere 20- 800,
- m: = 0 - 20, bevorzugt 0 - 6 insbesondere 0,
- n: = 0 - 20, bevorzugt 0 - 6 insbesondere 0,
- o: = 0 - 10,
- p: = 0 - 20, bevorzugt 1 - 15 insbesondere 2 - 10,
- q: = 0 - 20, bevorzugt 1 - 15 insbesondere 2 - 10,
und mit der Maßgabe, dass o + p größer oder gleich 2 ist.

Der Vorteil dieser Methode besteht insbesondere darin, dass sich das Produkt in einem Syntheseschritt bildet und nicht erst ein Amin-funktionelles Siloxan hergestellt werden muss, welches dann nachträglich amidisiert wird.

Die Reaktionszeit hängt dabei von der Wahl der Reaktionstemperatur, aber auch von dem angestrebten Umsetzungsgrad ab.

Es kann sinnvoll sein die Reaktion zeitweise oder vollständig unter vermindertem Druck durchzuführen, zum Beispiel um flüchtige Reaktions- oder Nebenreaktions-Produkte oder Lösemittelanteile zu entfernen. Bevorzugt wird zumindest zeitweise bei Drücken von kleiner 500 mbar gearbeitet, insbesondere zumindest zeitweise bei Drücken kleiner 300 mbar.
Gegebenfalls ist es sinnvoll, den Druck ein oder mehrfach während der Reaktion zu verändern und ein Druckprofil zu durchlaufen. So bildet sich zum Beispiel während der Reaktion ein Alkohol, der sich bei reduziertem Druck leichter aus dem Reaktionsgemisch entfernen lässt. Bei der destillativen Entfernung kann es aber zum starken Schäumen des Reaktionsgemisches kommen. Hier ist es gegebenenfalls sinnvoll, den Druck nicht zu niedrig zu wählen, da es ansonsten bei einer diskontinuierlichen Reaktionsführung zu einem Überschäumen der Reaktionsmasse aus dem Reaktorkessel kommen kann.

Die Umsetzung der Edukte geschieht bei 40 - 180 °C, bevorzugt bei 50 - 140 °C, insbesondere bei 60 - 120 °C. Gegebenenfalls ist es sinnvoll, die Temperatur während der Reaktionsphase zu variieren, zum Beispiel kann ein Temperaturprofil in Abhängigkeit der Zeit oder in Abhängigkeit des Umsatzes gefahren werden.

Gegebenfalls ist es sinnvoll die Edukte vorzuheizen und mit einer bestimmten Temperatur in den Reaktionskessel zu dosieren.

Gegebenfalls ist es sinnvoll die Edukte in einer bestimmten Reihenfolge zu dosieren und verschiedene Reaktionspartner zunächst alleine umzusetzen.

Gegebenfalls kann es sinnvoll sein, die Reaktion in Gegenwart eines Lösemittels durchzuführen. Durch ein Lösemittel lässt sich gegebenenfalls die Reaktionskinetik beeinflussen. Des Weiteren kann der Einsatz eines Lösemittels sinnvoll sein um die Viskosität des Reaktionsgemisches gezielt zu beeinflussen. Geeignete Lösemittel sind zum Beispiel: Toluol, Xylol, Polyether oder zum Beispiel Carbonate, wie Diethylhexylcarbonat. Das Lösemittel kann im Produkt verbleiben oder wieder destillativ entfernt werden.

Zur Herstellung von Amid-Amin-Siloxanen nach der hier beschriebenen Methode eignen sich auch kontinuierliche oder halbkontinuierliche Verfahren. Zum Beispiel lässt sich die Reaktion auch in einer Rührkesselkaskade oder in einem Strömungsrohr durchführen.

Neben den Carbonsäurenanhydriden können auch noch weitere freie Carbonsäuren zugesetzt werden um die Reaktion zu katalysieren.

Bei der Reaktion von SiOH-funktionellen Siloxanen der Formel I und aminofunktionellen Silanen der Formel II in Gegenwart von Carbonsäureanhydriden bilden sich Amid-Amin-Siloxane deren Polymerrückgrad mit endständigen kondensationsfähigen Gruppen ausgestattet ist. Kondensationsfähige Gruppen sind hier am Silizium-Atom gebundene Alkoxy- oder OH-Funktionen. Gegebenenfalls kann es sinnvoll sein, diese vollständig oder teilweise in nicht mehr kondensationsfähige Gruppen umzuwandeln. Eine Möglichkeit dies zu erreichen, ist sie zu Trialkylsilylgruppen umzusetzen (Silylierung), zum Beispiel durch den gezielten Zusatz monofunktioneller Trialkyl-alkoxysilane, wie zum Beispiel Trimethylethoxysilan oder Trimethylmethoxysilan oder durch den Zusatz von Bis(trialkylsilyl)aminen, wie zum Beispiel Bis(trimethylsilyl)amin. Der Zusatz der Silylierungmittel kann vor, während oder nach der Umsetzung der SiOH-funktionellen Siloxane mit den aminofunktionellen Silanen in Gegenwart der Carbonsäureanhydride erfolgen.

Ein weiterer Gegenstand dieser Erfindung ist daher ein Verfahren zur Herstellung von Amid-Amin-funktionellen Siloxanen, bei dem SiOH-funktionelle Siloxane der allgemeinen Formel I mit aminofunktionellen Silanen der allgemeinen Formel II und Trialkylalkoxysilanen der allgemeinen Formel VI oder Bis(trialkylsilyl)aminen der allgemeinen Formel VII in Gegenwart von Carbonsäureanhydriden bei Temperaturen von 40 - 180 °C zur Reaktion gebracht werden,

R⁹₃Si(OR²) Formel VI

(R⁹₃Si)₂NR⁵ Formel VII

oder
wobei
- R⁵: = ein Alkylrest mit 1-12 Kohlenstoffatomen, oder ein Arylrest mit 6-12 Kohlenstoffatomen oder ein Alkarylrest mit 7-12 Kohlenstoffatomen oder H, bevorzugt Methyl, Phenyl, Benzyl oder H, insbesondere H ist und
- R⁹: = gleiche oder verschiedene Alkylreste mit 1 bis 30 C-Atomen, bevorzugt Alkylreste mit 1-8 C-Atomen, insbesondere Methyl oder Ethyl sind.

Gegebenfalls kann es sinnvoll sein dem Reaktionsgemisch Wasser zuzusetzen, zum Beispiel um die Hydrolyse der Alkoxyfunktionen am Silizium zu ermöglichen bzw. zu beschleunigen.

Die Menge an Alkoxysilan bezogen auf das SiOH-funktionelle Siloxan ist variabel und kann je nach gewünschtem Modifikationsgrad eingestellt werden. Werden die Alkoxyfunktionen im Überschuss bezogen auf die eingesetzten SiOH-Funktionen eingesetzt, so ist damit zu rechnen, dass restliche Alkoxyfunktionen im Produkt verbleiben und das Polymer an den Kettenenden terminieren.

Werden die OH-Funktionen im Überschuss eingesetzt, so zeigt sich, dass je nach gewählten Reaktionsbedingungen, diese untereinander unter Bildung von Wasser weiter kondensieren können. Das Molgewicht des hergestellten Polymers hängt dann stark von den gewählten Reaktionsbedingungen ab.

Wird, wie oben beschrieben, mit einem Silylierungsmittel gearbeitet, so lässt sich das Molgewicht des entstehenden Produktes gezielt einstellen.

Die Menge an Carbonsäureanhydrid wird im Unterschuss bezogen auf die eingesetzte Aminmenge eingesetzt. Im erfindungsgemäßen Verfahren beträgt das Stoffmengenverhältnis aminofunktionelles Silan/Carbonsäureanhydrid zwischen 1/0,9 und 1/0,02, bevorzugt zwischen 1/0,8 und 1/0,04, insbesondere zwischen 1/0,6 und 1/0,06.

Ein weiterer Gegenstand dieser Erfindung ist die Umsetzung von SiOH-funktionellen Siloxanen der allgemeinen Formel I mit aminofunktionellen Silanen der allgemeinen Formel II und ein oder mehreren ein- oder mehrfachfunktinellen Alkoholen und gegebenfalls Trialkylalkoxysilanen oder Bis(trialkylsilyl)aminen in Gegenwart von Carbonsäureanhydriden bei Temperaturen von 40 - 180 °C.

Hierbei reagiert der Alkohol in einer Kondensationsreaktion mit dem SiOH-funktionellen Siloxanen oder den aminofunktionellen Silanen unter Ausbildung von SiOC-Bindungen. Durch die gezielte Zugabe von Alkoholen lassen sich die Eigenschaften des Amin-Amid-Siloxans gezielt einstellen.

Besonders geeignete Alkohole sind Fettalkohole und Polyether.

Geeignete Polyether können durch Anlagerung von Monomeren an einen Starter, der bevorzugt ein Alkohol, ein Amin, ein Alkanolamin, Wasser oder Ammoniak ist, gewonnen werden. Als Starter können z.B. Methanol, Ethanol, 1-Butanol, Bisphenol-A, 2-Aminoethanol, Ethylenglykol, Propylenglykol, Glycerin, Oligo- und Polyglycerine, 1,3-Dihydroxypropan, 1,4-Dihydroxybutan, 1,6-Dihydroxyhexan, 1,2,4-Trihydroxybutan, 1,2,6-Trihydroxyhexan, 1,1,1-Trimethylolpropan, Pentaerytritol, Oligomere des Pentaerythritols, Polycaprolacton, Xylitol, Arabitol, Sorbitol, Mannitol, Ethylendiamin, 1,2,3,4-Tetrahydroxybutan, Rizinusöl oder Fruktose sein.

Als Monomere geeignet sind zum Beispiel Ethylenoxid, Propylenoxid, sowie Verbindungen ausgewählt aus der Gruppe Tetrahydrofuran, 1,2-Epoxybutan (n-Butylenoxid), 2,3-Epoxybutan (iso-Butylenoxid), sowie Dodecyloxid. Dabei kann die Verteilung der Monomeren beliebig gewählt sein, so dass beispielsweise Blöcke enthalten sein können. Außerdem ist auch eine Mischung der Monomeren einsetzbar, so dass Polyether erhalten werden, in denen die Einheiten in statistischer Verteilung vorliegen oder graduell verteilt sind. Solche Polyether können statistisch angeordnet sein oder eine Blockstruktur aufweisen.

Durch den Zusatz von monofunktionellen Alkoholen zur Umsetzung von SiOH-funktionellen Siloxanen der allgemeinen Formel I mit aminofunktionellen Silanen der allgemeinen Formel II und gegebenenfalls Trialkylalkoxysilanen oder Bis(trialkylsilyl)aminen in Gegenwart von Carbonsäureanhydriden lässt sich zum Beispiel das Molgewicht der Kondensationsprodukte gezielt einstellen, da monofunktionelle Alkohole Kettenenden bilden. Zweifachfunktionelle Alkohole bilden dagegen bei vollständiger Einkondensation ein lineares Segment in dem Polymerrückgrad. Alkohole mit einer noch höheren Funktionalität führen zu Verzweigungen im Polymerrückgrad. Zudem werden die hydrophilen bzw. hydrophoben Eigenschaften des entstehenden aminofunktionellen Polymers wesentlich beeinflusst.

Weitere geeignete Alkohole sind zum Beispiel fettsäuremodifizierte Alkohole. Dabei handelt es sich um zwei oder mehrwertige Alkohole, bei denen die OH-Funktionen teilweise verestert sind.

Weitere geeignete Verbindungen die mindestens eine OH-Funktion tragen sind zum Beispiel fluorierte Alkohole wie C₆F₁₃-CH₂CH₂OH, oder mehrwertige Alkohole, wie 1,2-Propandiol, 1,6-Hexandiol, Poly-(ethylen-co-1,2-butylen)-diol, Poly-(hexamethylen-carbonat)-diol, Glucose, Fructose, Polyglycerin, Polyester-monoole oder Polyesterdiole, wie Poly-(caprolacton)-diol oder Poly-(hexamethylenphthalat)-diol oder fluorierte Polyether. Außerdem eignen sich Alkholamine, wie zum Beispiel Diethanolamin oder Ethanolamin. Auch hier können die OH- bzw. die Aminfunktionen teilweise verestert bzw. amidisiert vorliegen.

Weitere Gegenstände der Erfindung ergeben sich aus den Ansprüchen, deren Offenbarungsgehalt vollumfänglich Teil dieser Beschreibung ist.

### Herstellungsbeispiele:

In den nachfolgend aufgeführten Beispielen wird die vorliegende Erfindung zur Verdeutlichung der Erfindung beschrieben, ohne dass die Erfindung, deren Anwendungsbreite sich aus der gesamten Beschreibung und den Ansprüchen ergibt, auf die in den Beispielen genannten Ausführungsformen beschränkt sein soll. Sind in dieser Beschreibung und den Beispielen Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden im Rahmen der vorliegenden Erfindung Verbindungen, wie z.B. Amin-Amid-funktionelle Siloxane, beschrieben, die verschiedene Monomereinheiten mehrfach aufweisen können, so können diese statistisch verteilt (statistisches Oligomer) oder geordnet (Blockoligomer) in diesen Verbindungen vorkommen. Angaben zu Anzahl von Einheiten in solchen Verbindungen sind als statistische Mittelwerte, gemittelt über alle entsprechenden Verbindungen, zu verstehen.

Im Folgenden sind verschiedene Beispiele aufgeführt, bei denen das Verfahren zur Herstellung von Amid-Amin-Siloxanen beschrieben wird.

Die Viskosität der Produkte wurde mit Hilfe eines Viskosimeters der Marke Brookfield Viscometer Typ DV-I+ gemessen.

### Beispiel 1:

In einen 250 mL Dreihalskolben mit KPG-Rührer und Thermometer wurde 191 g eines Siloxans mit der allgemeinen Formel [HOSiMe₂O_{1/2}]₂[SiMe₂O_{2/2}]₃₈ und 7,4 g eines aminofunktionellen Silans der Formel Me(EtO)₂Si(CH₂)₃NH₂ gemischt und mit 1,3 g Essigsäureanhydrid versetzt. Das Gemisch wurde auf 90 °C erhitzt und für 3 h bei 100 mbar gerührt. Anfallendes Destillat wurde aus dem Reaktionsgemisch entfernt. Es wurde ein Amid-Amin-funktionelles Siloxan mit einer Viskosität von 4500 mPa s erhalten.

### Vergleichsbeispiel 1:

In einen 250 mL Dreihalskolben mit KPG-Rührer und Thermometer wurde 191 g eines Siloxans mit der allgemeinen Formel [HOSiMe₂O_{1/2}]₂[SiMe₂O_{2/2}]₃₈ und 7,4 g eines aminofunktionellen Silans der Formel Me(EtO)₂Si(CH₂)₃NH₂ gemischt und mit 1,3 g Essigsäure versetzt. Das Gemisch wurde auf 90 °C erhitzt und für 3 h bei 100 mbar gerührt. Anfallendes Destillat wurde aus dem Reaktionsgemisch entfernt. Es wurde ein Amin-funktionelles Siloxan mit einer Viskosität von 1100 mPa s erhalten.

### Beispiel 2:

In einen 250 mL Dreihalskolben mit KPG-Rührer und Thermometer wurde 189 g eines Siloxans mit der allgemeinen Formel [HOSiMe₂O_{1/2}]₂[SiMe₂O_{2/2}]₃₈, 7,3 g eines aminofunktionellen Silans der Formel Me(EtO)₂Si(CH₂)₃NH₂ und 3,0 g Trimethylethoxysilan gemischt und mit 1,3 g Essigsäureanhydrid versetzt. Das Gemisch wurde auf 90 °C erhitzt und für 3 h bei 100 mbar gerührt. Anfallendes Destillat wurde aus dem Reaktionsgemisch entfernt. Es wurde ein Amid-Amin-funktionelles Siloxan mit einer Viskosität von 2600 mPa s erhalten. ²⁹Si-NMR-spektroskopische Untersuchungen zeigen, dass es sich bei 53 % der Kettenendgruppen des entstandenen Polymers um Trimethylsilylgruppen handelt.

### Beispiel 3:

In einen 250 mL Dreihalskolben mit KPG-Rührer und Thermometer wurde 189 g eines Siloxans mit der allgemeinen Formel [HOSiMe₂O_{1/2}]₂[SiMe₂O_{2/2}]₃₈, 7,3 g eines aminofunktionellen Silans der Formel Me(EtO)₂Si(CH₂)₃NH₂ und 2,0 g Bis(trimethylsilyl)amin gemischt und mit 1,3 g Essigsäureanhydrid versetzt. Das Gemisch wurde auf 90 °C erhitzt und für 3 h bei 100 mbar gerührt. Anfallendes Destillat wurde aus dem Reaktionsgemisch entfernt. Es wurde ein Amid-Amin-funktionelles Siloxan mit einer Viskosität von 2100 mPa s erhalten. ²⁹Si-NMR-spektroskopische Untersuchungen zeigen, dass es sich bei 61 % der Kettenendgruppen des entstandenen Polymers um Trimethylsilylgruppen handelt.

### Beispiel 4:

In einen 250 mL Dreihalskolben mit KPG-Rührer und Thermometer wurde 191 g eines Siloxans mit der allgemeinen Formel [HOSiMe₂O_{1/2}]₂[SiMe₂O_{2/2}]₃₈, 4,0 g eines aminofunktionellen Silans der Formel Me(EtO)₂Si(CH₂)₃NH(CH)₂NH₂ und 4,1 g Trimethylethoxysilan gemischt und mit 1,0 g Essigsäureanhydrid versetzt. Das Gemisch wurde auf 90 °C erhitzt und für 1 h bei Normaldruck und für weitere 3 h bei 100 mbar gerührt. Anfallendes Destillat wurde aus dem Reaktionsgemisch entfernt. Es wurde ein Amid-Amin-funktionelles Siloxan mit einer Viskosität von 10500 mPa s erhalten. ²⁹Si-NMR-spektroskopische Untersuchungen zeigen, dass es sich bei 55 % der Kettenendgruppen des entstandenen Polymers um Trimethylsilylgruppen handelt.

### Beispiel 5:

In einen 250 mL Dreihalskolben mit KPG-Rührer und Thermometer wurde 164 g eines Siloxans mit der allgemeinen Formel [HOSiMe₂O_{1/2}]₂[SiMe₂O_{2/2}]₁₂, 10,4 g eines aminofunktionellen Silans der Formel Me(EtO)₂Si(CH₂)₃NH₂, 15 g Triethoxyoctylsilan und 8,6 g Trimethylethoxysilan gemischt und mit 1,8 g Essigsäureanhydrid versetzt. Das Gemisch wurde auf 80 °C erhitzt und für 3 h bei 100 mbar gerührt. Anfallendes Destillat wurde aus dem Reaktionsgemisch entfernt. Es wurde ein Amid-Amin-funktionelles Siloxan mit einer Viskosität von 25000 mPa s erhalten. ²⁹Si-NMR-spektroskopische Untersuchungen zeigen, dass es sich bei 58 % der Kettenendgruppen des entstandenen Polymers um Trimethylsilylgruppen handelt.

### Beispiel 6:

In einen 250 mL Dreihalskolben mit KPG-Rührer und Thermometer wurde 189 g eines Siloxans mit der allgemeinen Formel [HOSiMe₂O_{1/2}]₂[SiMe₂O_{2/2}]₃₈, und 3,0 g Trimethylethoxysilan gemischt und mit 1,3 g Essigsäureanhydrid versetzt. Das Reaktionsgemisch wurde für 2 h gerührt. Anschließend wurden 7,3 g eines aminofunktionellen Silans der Formel Me(EtO)₂Si(CH₂)₃NH₂ zugesetzt. Das Gemisch wurde auf 100 °C erhitzt und für 3 h bei 200 mbar gerührt. Anfallendes Destillat wurde aus dem Reaktionsgemisch entfernt. Es wurde ein Amid-Amin-funktionelles Siloxan mit einer Viskosität von 2300 mPa s erhalten.

### Beispiel 7:

In einen 250 mL Dreihalskolben mit KPG-Rührer und Thermometer wurde 192 g eines Siloxans mit der allgemeinen Formel [HOSiMe₂O_{1/2}]₂[SiMe₂O_{2/2}]₃₈, und 1,5 g Bis(trimethylsilyl)amin gemischt und mit 2,5 g Essigsäureanhydrid versetzt. Das Reaktionsgemisch wurde für 2 h gerührt. Anschließend wurden 4,9 g eines aminofunktionellen Silans der Formel Me(EtO)₂Si(CH₂)₃NH₂ zugesetzt. Das Gemisch wurde auf 100 °C erhitzt und für 3 h bei 200 mbar gerührt. Anfallendes Destillat wurde aus dem Reaktionsgemisch entfernt. Es wurde ein Amid-Amin-funktionelles Siloxan mit einer Viskosität von 3500 mPa s erhalten.

## Patentansprüche

1. Verfahren zur Herstellung von Amin-Amid-funktionellen Siloxanen, **dadurch gekennzeichnet, dass** SiOH-funktionelle Siloxane der allgemeinen Formel I mit aminofunktionellen Silanen der allgemeinen Formel II in Gegenwart von Carbonsäureanhydriden und optional in Gegenwart von Alkoholen, Aminen und/oder Alkanolaminen bei Temperaturen von 40 - 180 °C zur Reaktion gebracht werden,
M^{OH}a Db T_{c} Qd Formel I
wobei
M^{OH} = [HO-SiR¹₂O_{1/2}]
D = [SiR¹₂O_{2/2}]
T = [SiR¹O_{3/2}]
Q = [SiO_{4/2}]
a = 2 - 10,
b = 5 - 150,
c = 0 - 10,
d = 0 - 10,
R¹ = gleiche oder verschiedene Reste aus der Gruppe: Alkylreste mit 1-30 Kohlenstoffatomen, Arylreste mit 6-30 Kohlenstoffatomen, Alkarylreste mit 7-30 Kohlenstoffatomen,
R¹ₑ(R²O)_{f}SiR³ Formel II
wobei
e = 0, 1 oder 2,
f = 1, 2 oder 3,
mit der Maßgabe, dass e + f = 3 ist,
R² = gleiche oder verschiedene Alkylreste mit 1- 30 Kohlenstoffatomen oder Arylreste mit 6-30 Kohlenstoffatomen oder Alkarylreste mit 7-30 Kohlenstoffatomen,
R³ = gleiche oder verschiedene organische Reste, die mindestens eine Aminofunktion tragen.

2. Verfahren zur Herstellung von Amin-Amid-funktionellen Siloxanen nach Anspruch 1, **dadurch gekennzeichnet, dass** R³ in Formel II ein Rest der allgemeinen Formel III ist,
- (CR⁴₂)_{g}[NR⁵-(CR⁴₂)ᵢ]ₕNR⁵₂ Formel III
wobei
g = gleiche oder verschiedene ganze Zahlen von 1- 6,
h = gleiche oder verschiedene ganze Zahlen von 0- 6,
i = gleiche oder verschiedene ganze Zahlen von 1 - 6,
R⁴ = gleiche oder verschiedene Alkylreste mit 1-12 Kohlenstoffatomen, oder Arylreste mit 6-12 Kohlenstoffatomen oder Alkarylreste mit 7-12 Kohlenstoffatomen oder H sind,
R⁵ = gleiche oder verschiedene Alkylreste mit 1-12 Kohlenstoffatomen, oder Arylreste mit 6-12 Kohlenstoffatomen oder Alkarylreste mit 7-12 Kohlenstoffatomen oder H sind.

3. Verfahren zur Herstellung von Amin-Amid-funktionellen Siloxanen, nach Anspruch 1 oder 2, wobei gilt: c = 0, d = 0, a = 2.

4. Verfahren zur Herstellung von Amin-Amid-funktionellen Siloxanen, nach Anspruch 1 bis 3, wobei gilt: R¹ = Me.

5. Verfahren zur Herstellung von Amin-Amid-funktionellen Siloxanen, nach zumindest einem der Ansprüche 1 bis 4, wobei gilt: R⁴ = H, R⁵ = H, h = 0, g = 1 - 5.

6. Verfahren zur Herstellung von Amin-Amid-funktionellen Siloxanen, nach zumindest einem der Ansprüche 1 bis 5, wobei gilt: R⁴ = H, R⁵ = H, h = 1 oder 2, g = 1 - 5, i = 1 - 5.

7. Verfahren zur Herstellung von Amin-Amid-funktionellen Siloxanen, nach zumindest einem der Ansprüche 1 bis 6, **dadurch gekennzeichnet, dass** als aminofunktioelle Silane der Formel II (EtO)₃Si(CH₂)₃NH₂, (MeO)₃Si(CH₂)₃NH₂, Me (EtO)₂Si (CH₂)₃NH₂, Me (MeO)₂Si (CH₂)₃NH₂, (EtO)₃Si(CH₂)₃NH(CH₂)₂NH₂, (MeO)₃Si(CH₂)₃NH(CH₂)₂NH₂, Me (EtO)₂Si(CH₂)₃NH(CH₂)₂NH₂, Me(MeO)₂Si(CH₂)₃NH(CH₂)₂NH₂, (EtO)₃SiCH₂NH₂ oder (MeO)₃SiCH₂NH₂ eingesetzt werden.

8. Verfahren zur Herstellung von Amin-Amid-funktionellen Siloxanen, nach zumindest einem der Ansprüche 1 bis 6, **dadurch gekennzeichnet, dass** als Carbonsäureanhydride Anhydride von linearen oder verzweigten, gesättigten oder ungesättigten Alkylcarbonsäuren, Essigsäureanhydrid, Propionsäureanhydrid, Buttersäureanhydrid oder Isononansäureanhydrid, Bernsteinsäureanhydrid, Itaconsäure-Anhydride, Maleinsäureanhydrid, Glutarsäureanhydrid, Phthalsäure-Anhydrid oder Hexahydrophthalsäureanhydrid verwendet werden.

9. Verfahren zur Herstellung von Amin-Amid-funktionellen Siloxanen, deren Kettenenden zu mehr als die Hälfte nicht mehr kondensationsfähig sind, nach zumindest einem der Ansprüche 1 bis 8, **dadurch gekennzeichnet, dass** als weitere Reaktionskomponente ein oder mehrere Trialkylalkoxysilane d e r Formel VI oder Bis(trialkylsilyl)amine der allgemeinen Formel VII in Gegenwart von Carbonsäureanhydriden bei Temperaturen von 40 - 180 °C zur Reaktion gebracht werden,
R⁹₃Si(OR²) Formel VI
(R⁹₃Si)₂NR⁵ Formel VII
wobei
R⁵ = ein Alkylrest mit 1-12 Kohlenstoffatomen, oder ein Arylrest mit 6-12 Kohlenstoffatomen oder ein Alkarylrest mit 7-12 Kohlenstoffatomen oder H ist und
R⁹ = gleiche oder verschiedene Alkylreste mit 1 bis 30 C-Atomen sind.

10. Verfahren zur Herstellung von Amin-Amid-funktionellen Siloxanen, deren Kettenenden zu mehr als die Hälfte nicht mehr kondensationsfähig sind, nach zumindest einem der Ansprüche 1 bis 8, **dadurch gekennzeichnet, dass** als weitere Reaktionskomponente ein oder mehrere Bis(trialkylsilyl)amine zugesetzt werden.

11. Verfahren zur Herstellung von Amin-Amid-funktionellen Siloxanen, nach zumindest einem der Ansprüche 1 bis 10, **dadurch gekennzeichnet**, das als weitere Reaktionskomponente ein oder mehrfachfunktionelle Alkohole zugesetzt werden.

12. Verfahren zur Herstellung von Amin-Amid-funktionellen Siloxanen nach zumindest einem der Ansprüche 1 bis 11, wobei die Reaktion zumindest zeitweise bei Drücken von unter 500 mbar durchgeführt wird.

13. Verfahren zur Herstellung von Amin-Amid-funktionellen Siloxanen nach zumindest einem der Ansprüche 1 bis 12, **dadurch gekennzeichnet, dass** das Stoffmengenverhältnis zwischen aminofunktionellem Silan und Carbonsäureanhydrid zwischen 1/0,9 und 1/0,02 beträgt.

14. Zusammensetzungen, erhältlich nach zumindest einem Verfahren der Ansprüche 1 bis 13, enthaltend Amid-Amin-Siloxane der allgemeinen Formel Formel IV.
M^{OR}ⱼMkD₁TₘQₙM'ₒD'ₚT'_{q} Formel IV
wobei D, T und Q wie unter Anspruch 1 definiert sind und
M^{OR} = [_{R}⁶OSiR¹₂O_{1/2}] ist,
M = [R¹₃SiO_{1/2}] ist
M' = [R⁷SiR¹₂O_{1/2}] ist,
D' = [SiR¹R⁷O_{2/2}] ist,
T' = [SiR⁷O_{3/2}] ist, R⁶ = R² oder H ist R⁷ = gleiche oder verschiedene organische Reste sind, mit der Maßgabe, dass jedes Molekül der Formel IV statistisch mindestens einen Aminrest der allgemeinen Formel III und zudem mindestens einen Amid-Rest der allgemeinen Formel V trägt,
- (CR⁹₂)_{g}[NR⁵-(CR⁴₂)ᵢ]ₕNR⁵₂ Formel III
- (CR⁵₂)_{g}[NR⁸-(CR⁵₂)ᵢ]ₕNR⁸₂ Formel V
R⁸ = R⁵ oder eine Carboxylatgruppe ist, mit der Maßgabe, dass mindestens einer der beiden R⁸-Reste in der Formel V ein Carboxylatrest ist,
j = 0 - 10 ist,
k = 0 - 10 ist,
mit der Maßgabe, dass j + k größer oder gleich 2 ist,
l = 10 - 3000 ist,
m = 0 - 20 ist,
n = 0 - 20 ist,
o = 0 - 10 ist,
p = 0 - 20 ist,
q = 0 - 20 ist,
und mit der Maßgabe, dass o + p größer oder gleich 2 ist.

15. Zusammensetzungen gemäß Anspruch 14 enthaltend Amid-Amin-Siloxane der allgemeinen Formel IV, wobei gilt m = 0, n = 0, j + k = 2.

## Claims

1. A process for the preparation of amine-amide-functional siloxanes, **characterized in that** SiOH-functional siloxanes of the general formula I are reacted with amino-functional silanes of the general formula II in the presence of carboxylic acid anhydrides and optionally in the presence of alcohols, amines and/or alkanolamines a t temperatures of 40 - 180°C,
M^{OH}ₐ D_{b} T_{c} Q_{d} Formula I
where
M^{OH} = [HO-SIR¹₂O_{1/2}]
D = [SiR¹₂O_{2/2}]
T = [SiR¹O_{3/2}]
Q = [SiO_{4/2}]
a = 2 - 10,
b = 5 - 150,
c = 0 - 10,
d = 0 - 10,
R¹ = identical or different radicals from the group: alkyl radicals having 1-30 carbon atoms, aryl radicals having 6-30 carbon atoms, alkaryl radicals having 7-30 carbon atoms,
R¹ₑ (R²O)_{f}SiR³ Formula II
where
e = 0, 1 or 2,
f = 1, 2 or 3,
with the proviso that e + f = 3,
R² = identical or different alkyl radicals having 1-30 carbon atoms or aryl radicals having 6-30 carbon atoms or alkaryl radicals having 7-30 carbon atoms,
R³ = identical or different organic radicals which carry at least one amino function.

2. A process for the preparation of amine-amide-functional siloxanes according to claim 1, **characterized in that** R³ in formula II is a radical of the general formula III,
- (CR⁴₂)_{g}[NR⁵-(CR⁴₂)ᵢ]ₕNR⁵₂ Formula III
where
g = identical or different integers from 1-6,
h = identical or different integers from 0-6,
i = identical or different integers from 1-6,
R⁴ = identical or different alkyl radicals having 1-12 carbon atoms, or aryl radicals having 6-12 carbon atoms or alkaryl radicals having 7-12 carbon atoms or H,
R⁵ = identical or different alkyl radicals having 1-12 carbon atoms, or aryl radicals having 6-12 carbon atoms or alkaryl radicals having 7-12 carbon atoms or H.

3. A process for the preparation of amine-amide-functional siloxanes according to either of claims 1 and 2, where the following apply: c = 0, d = 0, a = 2.

4. A process for the preparation of amine-amide-functional siloxanes according to any one of claims 1 to 3, where the following applies: R¹ = Me.

5. A process for the preparation of amine-amide-functional siloxanes according to at least one of claims 1 to 4, where the following apply: R⁴ = H, R⁵ = H, h = 0, g = 1-5.

6. A process for the preparation of amine-amide-functional siloxanes according to at least one of claims 1 to 5, where the following apply: R⁴ = H, R⁵ = H, h = 1 or 2, g = 1 - 5, i = 1-5.

7. A process for the preparation of amine-amide-functional siloxanes according to at least one of claims 1 to 6, **characterized in that** (EtO)₃Si(CH₂)₃NH₂, (MeO)₃Si(CH₂)₃NH₂, Me(EtO)₂Si(CH₂)₃NH₂, Me(MeO)₂Si(CH₂)₃NH₂, (EtO)₃Si(CH₂)₃NH(CH₂)₂NH₂, (MeO)₃Si(CH₂)₃NH(CH₂)₂NH₂, Me (EtO)₂Si(CH₂)₃NH(CH₂)₂NH₂, Me (MeO)₂Si(CH₂)₃NH(CH₂)₂NH₂, (EtO)₃SiCH₂NH₂ or (MeO)₃SiCH₂NH₂ are used as amino-functional silanes of the formula II.

8. A process for the preparation of amine-amide-functional siloxanes according to at least one of claims 1 to 6, **characterized in that** anhydrides of linear or branched, saturated or unsaturated alkylcarboxylic acids, acetic anhydride, propionic anhydride, butyric anhydride or isononanoic anhydride, succinic anhydride, itaconic anhydrides, maleic anhydride, glutaric anhydride, phthalic anhydride or hexahydrophthalic anhydride are used as carboxylic acid anhydrides.

9. A process for the preparation of amine-amide-functional siloxanes, more than half of the chain ends of which are no longer capable of condensation, according to at least one of claims 1 to 8, **characterized in that** one or more trialkylalkoxysilanes of the formula VI or bis(trialkylsilyl)amines of the general formula VII are reacted as further reaction component in the presence of carboxylic acid anhydrides at temperatures of 40-180°C,
R⁹₃Si(OR²) Formula VI
(R⁹₃Si)₂NR⁵ Formula VII
where
R⁵ = an alkyl radical having 1-12 carbon atoms, or an aryl radical having 6-12 carbon atoms or an alkaryl radical having 7-12 carbon atoms or H and R⁹ = identical or different alkyl radicals having 1 to 30 carbon atoms.

10. A process for the preparation of amine-amide-functional siloxanes, more than half of the chain ends of which are no longer capable of condensation, according to at least one of claims 1 to 8, **characterized in that** one or more bis(trialkylsilyl)amines are added as further reaction component.

11. A process for the preparation of amine-amide-functional siloxanes according to at least one of claims 1 to 10, **characterized in that** one or more polyfunctional alcohols are added as further reaction component.

12. A process for the preparation of amine-amide-functional siloxanes according to at least one of claims 1 to 11, the reaction being carried out at least at times at pressures of below 500 mbar.

13. A process for the preparation of amine-amide-functional siloxanes according to at least one of claims 1 to 12, **characterized in that** the quantitative ratio between amino-functional silane and carboxylic acid anhydride is from 1/0.9 to 1/0.02.

14. A composition obtainable by at least one process of claims 1 to 13, containing amide-amine-siloxanes of the general formula IV,
M^{OR}ⱼMₖD₁TₘQₙM'ₒD'ₚT'_{q} Formula IV
where D, T and Q are defined as under claim 1 and M^{OR} = [R⁶OSiR¹₂O_{1/2}],
M = R¹3SiO_{1/2}],
M' = [R⁷SiR¹₂O_{1/2}],
D' = [SiR¹R⁷O_{2/2}],
T' = [SIR⁷O_{3/2}],
R⁶ = R² or H
R⁷ = identical or different organic radicals, with the proviso that each molecule of the formula IV carries, in statistical terms, at least one amine radical of the general formula III and moreover at least one amide radical of the general formula V,
-(CR⁴₂)_{g}[NR⁵-(CR⁴₂)ᵢ]ₕNR⁵₂ Formula III
- (CR⁵₂)_{g}[NR⁸-(CR⁵₂)ᵢ]ₕNR⁸₂ Formula V
R⁸ = R⁵ or a carboxylate group, with the proviso that at least one of the two R⁸ radicals in the formula V is a carboxylate radical,
j = 0 - 10,
k = 0 - 10,
with the proviso that j + k is greater than or equal to 2,
l = 10 - 3000,
m = 0 - 20,
n = 0 - 20,
o = 0 - 10,
p = 0 - 20,
q = 0 - 20,
and with the proviso that o + p is greater than or equal to 2.

15. A composition according to claim 14 containing amide-amine siloxanes of the general formula IV, where the following apply: m = 0, n = 0, j + k = 2.

## Revendications

1. Procédé de fabrication de siloxanes à fonction amino-amide, **caractérisé en ce que** des siloxanes à fonction SiOH de formule générale I sont mis en réaction avec des silanes à fonction amino de formule générale II en présence d' anhydrides d'acides carboxyliques et éventuellement en présence d'alcools, d'amines et/ou d'alcanolamines à des températures de 40 à 180 °C,
M^{OH}ₐD_{b}T_{c}Q_{d} Formule I
dans laquelle
M^{OH} = [HO-SIR¹₂O_{1/2}]
D = [SiR¹₂O_{2/2}]
T = [SiR¹O_{3/2}]
Q = [SiO_{4/2}]
a = 2 à 10,
b = 5 à 150,
c = 0 à 10,
d = 0 à 10,
R¹ = radicaux identiques ou différents du groupe : radicaux alkyle contenant 1 à 30 atomes de carbone, radicaux aryle contenant 6 à 30 atomes de carbone, radicaux alkaryle contenant 7 à 30 atomes de carbone,
R¹ₑ(R²O)_{f}SiR³ Formule II
dans laquelle
e = 0, 1 ou 2,
f = 1, 2 ou 3,
à condition que e + f = 3,
R² = radicaux alkyle contenant 1 à 30 atomes de carbone ou radicaux aryle contenant 6 à 30 atomes de carbone ou radicaux alkaryle contenant 7 à 30 atomes de carbone identiques ou différents,
R³ = radicaux organiques identiques ou différents portant au moins une fonction amino.

2. Procédé de fabrication de siloxanes à fonction amino-amide selon la revendication 1, **caractérisé en ce que** R³ dans la formule II est un radical de formule générale III
- (CR⁴₂)_{g}[NR⁵-(CR⁴₂)ᵢ]ₕNR⁵₂ Formule III
dans laquelle
g = nombres entiers identiques ou différents de 1 à 6,
h = nombres entiers identiques ou différents de 0 à 6,
i = nombres entiers identiques ou différents de 1 à 6,
R⁴ = radicaux alkyle contenant 1 à 12 atomes de carbone ou radicaux aryle contenant 6 à 12 atomes de carbone ou radicaux alkaryle contenant 7 à 12 atomes de carbone identiques ou différents ou H,
R⁵ = radicaux alkyle contenant 1 à 12 atomes de carbone ou radicaux aryle contenant 6 à 12 atomes de carbone ou radicaux alkaryle contenant 7 à 12 atomes de carbone identiques ou différents ou H.

3. Procédé de fabrication de siloxanes à fonction amino-amide selon la revendication 1 ou 2, dans lequel c = 0, d = 0, a = 2.

4. Procédé de fabrication de siloxanes à fonction amino-amide selon les revendications 1 à 3, dans lequel R¹ = Me.

5. Procédé de fabrication de siloxanes à fonction amino-amide selon au moins l'une quelconque des revendications 1 à 4, dans lequel R⁴ = H, R⁵ = H, h = 0, g = 1 à 5.

6. Procédé de fabrication de siloxanes à fonction amino-amide selon au moins l'une quelconque des revendications 1 à 5, dans lequel R⁴ = H, R⁵ = H, h = 1 ou 2, g = 1 à 5, i = 1 à 5.

7. Procédé de fabrication de siloxanes à fonction amino-amide selon au moins l'une quelconque des revendications 1 à 6, **caractérisé en ce qu'**on utilise (EtO)₃Si(CH₂)₃NH₂, (MeO)₃Si(CH₂)₃NH₂, Me(EtO)₂Si(CH₂)₃NH₂, Me (MeO)₂Si(CH₂)₃NH₂, (EtO)₃Si(CH₂)₃NH(CH₂)₂NH₂, (MeO)₃Si(CH₂)₃NH(CH₂)₂NH₂, Me(EtO)₂Si(CH₂)₃NH(CH₂)₂NH₂, Me (MeO)₂Si(CH₂)₃NH(CH₂)₂NH₂, (EtO)₃SiCH₂NH₂ ou (MeO)₃SiCH₂NH₂ en tant que silanes à fonction amino de formule II.

8. Procédé de fabrication de siloxanes à fonction amino-amide selon au moins l'une quelconque des revendications 1 à 6, **caractérisé en ce qu'**on utilise des anhydrides d'acides alkylcarboxyliques linéaires ou ramifiés, saturés ou insaturés, l'anhydride de l'acide acétique, l'anhydride de l'acide propionique, l'anhydride de l'acide butyrique ou l'anhydride de l'acide isononanoïque, l'anhydride de l'acide succinique, des anhydrides de l'acide itaconique, l'anhydride de l'acide maléique, l'anhydride de l'acide glutarique, l'anhydride de l'acide phtalique ou l'anhydride de l'acide hexahydrophtalique en tant qu'anhydrides d'acides carboxyliques.

9. Procédé de fabrication de siloxanes à fonction amino-amide dont les extrémités de chaîne ne sont plus condensables à plus de moitié selon au moins l'une quelconque des revendications 1 à 8, **caractérisé en ce qu'**en tant que composant réactionnel supplémentaire, un ou plusieurs trialkylalcoxysilanes de formule VI ou une ou plusieurs bis(trialkylsilyl)amines de formule générale VII sont mis en réaction en présence d'anhydrides d'acides carboxyliques à des températures de 40 à 180 °C,
R⁹₃Si(OR²) Formule VI
(R⁹₃Si)₂NR⁵ Formule VII
dans lesquelles
R⁵ = un radical alkyle contenant 1 à 12 atomes de carbone ou un radical aryle contenant 6 à 12 atomes de carbone ou un radical alkaryle contenant 7 à 12 atomes de carbone ou H, et
R⁹ = radicaux alkyle identiques ou différents contenant 1 à 30 atomes C.

10. Procédé de fabrication de siloxanes à fonction amino-amide dont les extrémités de chaîne ne sont plus condensables à plus de moitié selon au moins l'une quelconque des revendications 1 à 8, **caractérisé en ce qu'**une ou plusieurs bis(trialkylsilyl)amines sont ajoutées en tant que composant réactionnel supplémentaire.

11. Procédé de fabrication de siloxanes à fonction amino-amide selon au moins l'une quelconque des revendications 1 à 10, **caractérisé en ce que** des alcools mono- ou polyfonctionnels sont ajoutés en tant que composant réactionnel supplémentaire.

12. Procédé de fabrication de siloxanes à fonction amino-amide selon au moins l'une quelconque des revendications 1 à 11, dans lequel la réaction est réalisée au moins par intermittence à des pressions inférieures à 500 mbar.

13. Procédé de fabrication de siloxanes à fonction amino-amide selon au moins l'une quelconque des revendications 1 à 12, **caractérisé en ce que** le rapport entre les quantités de matière de silane à fonction amino et d'anhydride d'acide carboxylique est compris entre 1/0,9 et 1/0,02.

14. Compositions, pouvant être obtenues par au moins l'un quelconque des procédés selon les revendications 1 à 13, contenant des amido-amino-siloxanes de formule générale IV :
M^{OR}ⱼMₖDₗTₘQₙM'ₒD'ₚT'_{q} Formule IV
dans laquelle D, T et Q sont tels que définis dans la revendication 1 et
M^{OR} = [R⁶OSiR¹₂O_{1/2}],
M = [R¹₃SiO_{1/2}],
M' = [R⁷SiR¹₂O_{1/2}],
D' = [SiR¹R⁷O_{2/2}],
T' = [SiR⁷O_{3/2}],
R⁶ = R² ou H,
R⁷ = radicaux organiques identiques ou différents, à condition que chaque molécule de formule IV porte statistiquement au moins un radical amine de formule générale III et également au moins un radical amide de formule générale V,
- (CR⁴₂)_{g}[NR⁵-(CR⁴₂)ᵢ]ₕNR⁵₂ Formule III
- (CR⁵₂)_{g}[NR⁸-(CR⁵₂)ᵢ]ₕNR⁸₂ Formule V
R⁸ = R⁵ ou un groupe carboxylate, à condition qu'au moins un des deux radicaux R⁸ dans la formule V soit un radical carboxylate,
j = 0 à 10,
k = 0 à 10,
à condition que j + k soit supérieur ou égal à 2,
l = 10 à 3 000,
m = 0 à 20,
n = 0 à 20,
o = 0 à 10,
p = 0 à 20,
q = 0 à 20,
et à condition que o + p soit supérieur ou égal à 2.

15. Compositions selon la revendication 14 contenant des amido-amino-siloxanes de formule générale IV, dans lesquelles m = 0, n = 0, j + k = 2.
